# EUROPÄISCHE PATENTANMELDUNG

(11) **EP 4 647 202 A1**
(43) Veröffentlichungstag der Anmeldung: **12.11.2025**
(21) Anmeldenummer: 24174357.4
(22) Anmeldetag: 06.05.2024
(51) Int. Cl.: B23K 26/03, B23K 26/38

(54) **VERFAHREN UND VORRICHTUNG ZUM EINSTECHEN IN EIN METALLISCHES WERKSTÜCK**

(71) Anmelder: Bystronic Laser AG, 3362 Niederönz (CH)
(72) Erfinder: SCHEIDIGER, Simon, 4900 Langenthal (CH); LUEDI, Andreas, 3400 Burgdorf (CH)
(74) Vertreter: Patentanwälte Geyer, Fehners & Partner mbB

(57) **Zusammenfassung**

Es wird ein Verfahren zum Einstechen in ein metallisches Werkstück angegeben, beinhaltend Erzeugen eines Bearbeitungslaserstrahls mit einer Laserquelle (S1); Leiten des Bearbeitungslaserstrahls mittels einer Optikanordnung auf das Werkstück (S2); Einstechen des Bearbeitungslaserstrahls in das Werkstück unter Erzeugen einer Prozesszone mit einer Schmelzschicht (S3); und Detektieren eines durch den Bearbeitungslaserstrahl in der Schmelzschicht erzeugten Prozesslichts (S4). Eine Mehrzahl von Strahlungsintensitätswerten der Schmelzschicht werden örtlich aufgelöst oder flächig integriert und zeitlich aufgelöst anhand des detektierten Prozesslichts ermittelt (S5). Mindestens einer der ermittelten Strahlungsintensitätswerte wird bei Erreichen eines kritischen Strahlungsintensitätswerts auf einen Soll-Strahlungsintensitätswert gleich oder kleiner dem kritischen Strahlungsintensitätswert geregelt (S6) durch Anpassen mindestens eines Prozessparameters des Verfahrens ausgewählt aus einer Leistung der Laserquelle; einem Puls-Tastverhältnis der Laserquelle; einer strahlformenden dynamischen Bewegung des Bearbeitungslaserstrahls; einer Position einer Fokalebene des Bearbeitungslaserstrahls; einem Fokusdurchmesser des Bearbeitungslaserstrahls; und einer Magnifikation des Bearbeitungslaserstrahls. Der kritische Strahlungsintensitätswert wird zu einem Zeitpunkt vor einem Einsetzen einer Verdampfung eines Materials der Schmelzschicht und/oder einer Prozessinstabilität bestimmt.

## Beschreibung

Die Erfindung betrifft ein Verfahren und eine Vorrichtung zum Einstechen in ein metallisches Werkstück mittels eines Bearbeitungslaserstrahls und ein Computerprogrammprodukt.

Zum Schneiden eines blechförmigen Werkstücks mit einem Laserstrahl wird bei Blechen einer größeren Dicke typischerweise ein Einstechen mit dem Laserstrahl durchgeführt, bevor geschnitten werden kann. Der Einstech-Prozess kann sich auf den Prozess des Laserschneidens auswirken. Nebst der Einstechdauer können Spritzer eines metallischen Materials, die aus einer beim Einstechen erzeugten Metallschmelze ausgeworfen werden, den Vorgang des Einstechens beeinflussen, insbesondere im Hinblick auf die Qualität des Einstichloches wie auch auf die Lebensdauer eines Schneidkopf-Schutzglases. J. Pocorni untersuchte bei verschiedenen Laserleistungen und Blechdicken die Einstichdauer, vgl. Jetro Pocorni et al., Investigation of the piercing process in laser cutting of stainless steel, J. Laser Appl., Vol. 29, No. 2, May 2017. EP4144474 A1 beschreibt eine dynamisch einstellbare Magnifikation des Bearbeitungslaserstrahls, z.B. beim Einstechen.

In der EP4241913 A1 wird ein Messen der Temperatur einer Metallschmelze beschrieben, wobei die Temperatur während des Laserschneidens zur optimalen Einstellung eines Gasgemisches eingesetzt werden kann. Untersuchungen des Prozessleuchtens während dem Laserschneiden sind bekannt aus EP3838471 A1 und DE202014010995 U1. Ein Messen der Blechoberflächentemperatur neben dem Schnitt während des Laserschneidens ist in der US2020298335 AA beschrieben. Diese Veröffentlichungen befassen sich nicht mit dem Einstechverhalten. Eine Untersuchung zum Einstechen mit einem Laserstrahl in ein Werkstück ist aus der US2022080523 AA bekannt, wobei die Autoren dieser Veröffentlichung aus dem Einstechverhalten auf Materialeigenschaften zu schließen hoffen. Es wird erwähnt, dass die Werkstücktemperatur oder die Schmelztemperatur von Interesse sein kann.

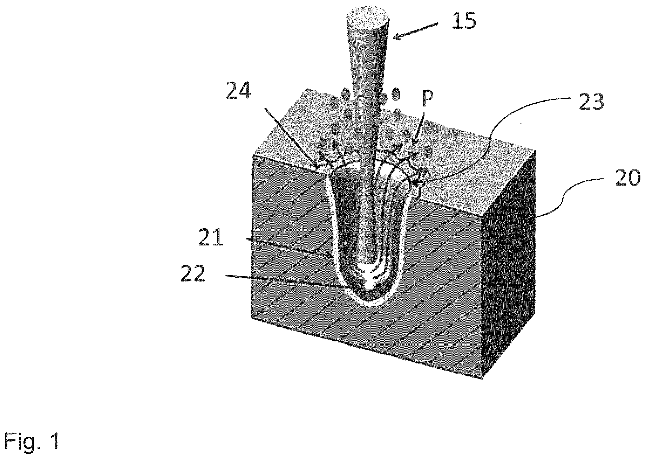

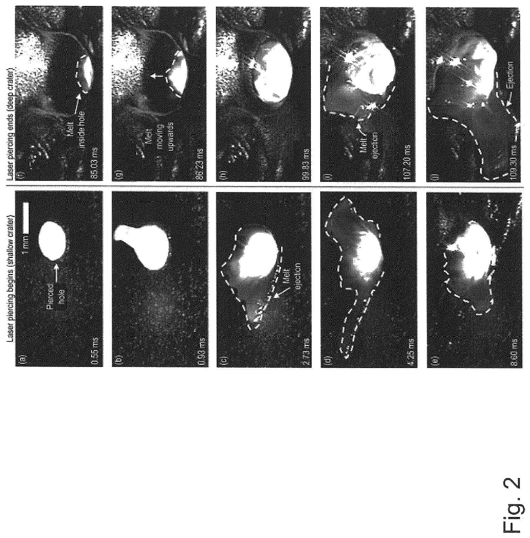

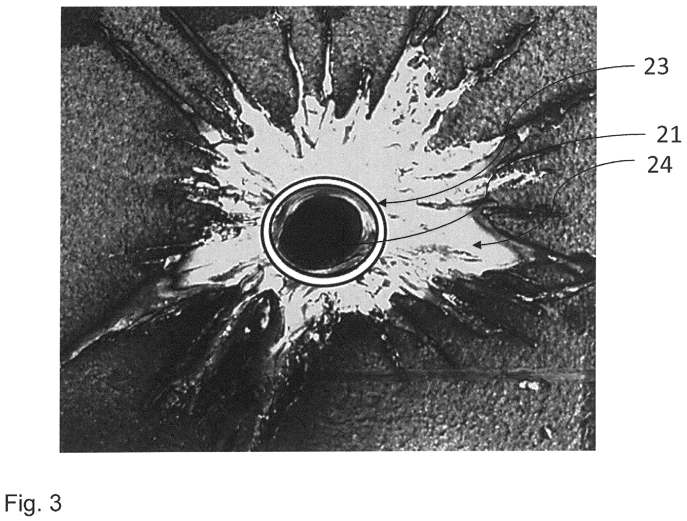

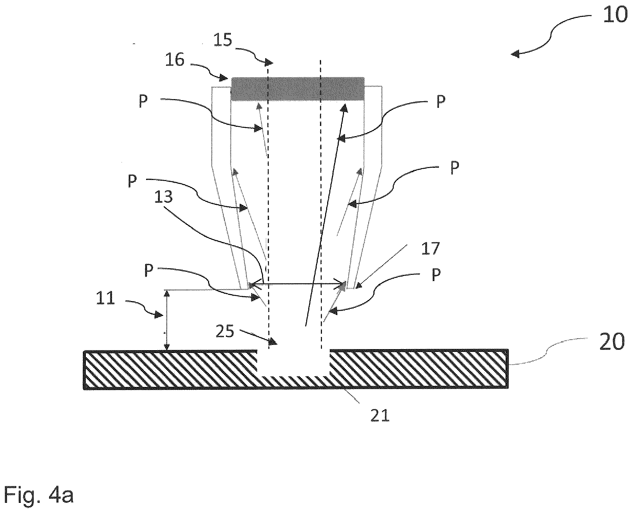

Beim Lasereinstechen wird ein sogenanntes Schmelzbad (melt pool) erzeugt, wie in der oben genannten Veröffentlichung von J. Pocorni beschrieben ist. Fig. 1 bis Fig. 3 zeigen Abbildungen aus dieser Veröffentlichung, mit eingefügten Bezugszeichen. Das Schmelzbad kann auch Schmelzschicht oder Schmelzfilm genannt werden. Beim Einstechen kann der Begriff eines Schmelzbades genutzt werden, da die Schmelze durch die Geometrie des Einstechkanals zu einem Bad zusammengehalten wird. Wenn zu viel Laserenergie eingebracht wird, kann es in dem Schmelzbad zu Prozessinstabilitäten und/oder zu Überhitzungen, z.B. zu lokalen Überhitzungen, und/oder in Folge zur Blasenbildung kommen. Dabei werden Metallspritzer aus dem Schmelzbad mit großer Geschwindigkeit herausgeschleudert, wie in Fig. 1 und 2 veranschaulicht. Fig. 1 zeigt schematisch einen durch einen Bearbeitungslaserstrahl 15 erzeugten Einstechkanal 21 eines Werkstücks 20, mit einer unten im Einstechkanal entstandenen Schmelze in einer Schmelzschicht 22, auch Schmelzbad genannt, und einer Spritzzone 24 am oberen Rand 23 des Einstechkanals 21. Die Richtungen, in die die Schmelze herausgeschleudert wird, sind mit Pfeilen P veranschaulicht. Fig. 2 zeigt Hochgeschwindigkeits-Aufnahmen a bis j eines Einstechprozesses, mit dem Beginn des Einstechens in der linken Spalte und dem Ende des Einstechens in der rechten Spalte. Dabei ist insbesondere in Fig. 2b, c und i die Entstehung von Metallspritzern gut zu sehen. Zumeist setzten sich die Metallspritzer auf dem Werkstück ab und führen zu einer erstarrten Schmelze in der Spritzzone 24 um den Einstechkanal, wie aus der Aufnahme der Fig. 3 ersichtlich ist. Wenn aber weitere Parameter wie z.B. ein Abstand 11 einer Düse an einer Ausgangsöffnung eines typischen Laserbearbeitungskopfes 10, eine Apertur der Düse und/oder der Gasdruck eines Prozessgases in ungünstiger Art und Weise dazu kommen, wie in Fig. 4a veranschaulicht, können diese Metallspritzer bis zu einem unteren Schutzglas 16 innerhalb des Laserbearbeitungskopfes 10 geschleudert werden, was anhand der Pfeile P veranschaulicht ist. Die Metallspritzer können sich im Laserbearbeitungskopf 10 absetzen, erstarren und durch die andauernde Laserstrahlung zu einer lokalen Beschädigung des Schutzglases 16 führen, was als Einbrand bezeichnet wird. Fig. 4a zeigt den Düsenabstand 11, die Prozesszone 25, die Düsenöffnung 13, den Bearbeitungslaserstrahl 15, das Schutzglas 16 und die Düsenspitze 17.

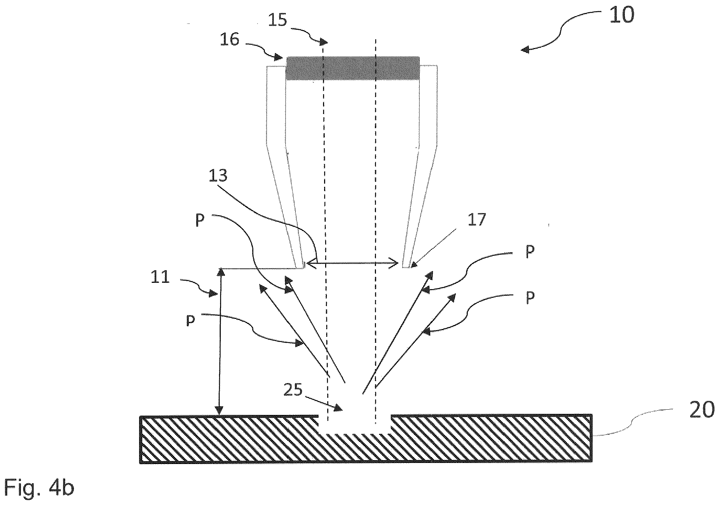

Die zunehmende Verschmutzung des Schutzglases 16 führt zu einem Ansprechen einer Schutzglasüberwachung oder zu Nachteilen beim Laserschneiden, z.B. eine verminderte Schneidqualität, einen Laserstrahlabriss infolge einer Verschiebung des Fokus und/oder eine Verschlechterung der Laserstrahlqualität. In Folge muss das Schutzglas gewechselt werden, was einerseits zu einem ungewollten Produktionsstopp führt und andererseits Kosten, z.B. für das Ersatzglas, verursacht. Dem kann entgegengewirkt werden, indem man die geometrisch ungünstigen Bedingungen, wie in Fig. 4a veranschaulicht, vermeidet, z.B. durch Erhöhung des Düsenabstands 11 des Bearbeitungskopfes 10 zum Werkstück, wie in Fig. 4b gezeigt. Dies führt aber zu einer signifikanten Erhöhung der Einstechzeit, was einen weiteren Nachteil darstellt.

Aufgabe der Erfindung ist es, ein Verfahren und eine Vorrichtung zum Einstechen in ein metallisches Werkstück mittels eines Bearbeitungslasers bereitzustellen, welche eine hohe Einstechqualität und einen nachfolgenden Schneidprozess hoher Qualität ermöglichen.

Diese Aufgabe wird gelöst durch ein Verfahren zum Einstechen in ein metallisches Werkstück mittels eines Bearbeitungslasers nach Anspruch 1, eine Vorrichtung zum Einstechen in ein metallisches Werkstück mittels eines Bearbeitungslasers nach Anspruch 13, sowie ein Computerprogrammprodukt nach Anspruch 15.

Eine Ausführungsform betrifft ein Verfahren zum Einstechen in ein metallisches Werkstück mittels eines Bearbeitungslaserstrahls, beinhaltend
- Erzeugen des Bearbeitungslaserstrahls mit einer Laserquelle;
- Leiten des Bearbeitungslaserstrahls mittels einer Optikanordnung auf das Werkstück;
- einmaliges oder mehrmaliges Einstechen des Bearbeitungslaserstrahls in das Werkstück unter Erzeugen einer Prozesszone mit einer Schmelzschicht; und
- Detektieren eines durch den Bearbeitungslaserstrahl in der Schmelzschicht erzeugten Prozesslichts;

wobei eine Mehrzahl von Strahlungsintensitätswerten der Schmelzschicht örtlich aufgelöst oder flächig integriert und zeitlich aufgelöst anhand des detektierten Prozesslichts ermittelt werden; und mindestens einer der ermittelten Strahlungsintensitätswerte bei Erreichen eines kritischen Strahlungsintensitätswerts auf einen Soll-Strahlungsintensitätswert gleich oder kleiner dem kritischen Strahlungsintensitätswert geregelt wird durch Anpassen mindestens eines Prozessparameters des Verfahrens;
wobei der mindestens eine Prozessparameter ausgewählt wird aus
   - einer Leistung der Laserquelle;
   - einem Puls-Tastverhältnis der Laserquelle;
   - einer strahlformenden dynamischen Bewegung des Bearbeitungslaserstrahls;
   - einer Position einer Fokalebene des Bearbeitungslaserstrahls;
   - einem Fokusdurchmesser des Bearbeitungslaserstrahls; und
   - einer Magnifikation des Bearbeitungslaserstrahls;
wobei der kritische Strahlungsintensitätswert mindestens einmal zu einem Zeitpunkt vor, insbesondere unmittelbar vor, einem Einsetzen einer Verdampfung eines Materials der Schmelzschicht und/oder einer Prozessinstabilität bestimmt wird oder vorbestimmt ist.

Mit dem Verfahren kann eine Echtzeit-Überwachung von Strahlungsintensitätswerten der Schmelzschicht, z.B. als davon abgeleitete Temperatur der Schmelze, auch Metallschmelze genannt, in situ durchgeführt werden. So kann der mindestens eine Strahlungsintensitätswert durch Anpassen von Prozessparametern während dem Einstechen auf den kritischen Strahlungsintensitätswert, d.h. einen Strahlungsintensitätswert unterhalb einer Verdampfung des Materials der Schmelzschicht und/oder vor einer Prozessinstabilität, geregelt werden. Es können mit dem Verfahren lokale Überhitzungen in der Schmelzschicht und/oder Prozessinstabilitäten vermieden werden. Das Einstechverhalten kann hinsichtlich Materialauswurf und Spritzer optimiert werden. Ferner können Einstechzeiten, insbesondere die Einstechdauer, minimiert werden.

In dem Verfahren kann ein einmaliges oder mehrmaliges Einstechen erfolgen. Zum Beispiel kann das Verfahren zum Einstechen mit einem einmaligen oder mehrmaligen Einstechen zusammen mit einem Verfahren zum Laserschneiden ausgeführt werden, in dem ein oder mehrere Teile aus dem Werkstück geschnitten werden, wobei bei jedem Teil ein Einstechen erfolgt. Alternativ kann das Verfahren zum Einstechen mit einem einmaligen Einstechen jedes Mal vor dem Schneiden eines Teils in einem Verfahren zum Laserschneiden ausgeführt werden, in dem ein oder mehrere Teile aus dem Werkstück geschnitten werden.

Die Prozessinstabilität kann ein Strahlungsintensitätswert sein, der mehr als 15%, bevorzugt mehr als 10%, mehr bevorzugt mehr als 5%, von einem Mittelwert der ermittelten Strahlungsintensitätswerte abweicht. Zum Beispiel kann die Prozessinstabilität ein Wert des Betrags des Verhältnisses einer Änderung des detektierten Signals der Strahlungsintensität zum Mittelwert der detektierten Signale der Strahlungsintensität von über 15%, bevorzugt über 10 %, mehr bevorzugt über 5%, sein. Die Strahlungsintensität, welche vor, insbesondere unmittelbar vor, dem Einsetzen der Prozessinstabilität gemessen wird, kann der kritische Strahlungsintensitätswert sein.

Der Begriff "vorbestimmt" kann bedeuten, dass als der kritische Strahlungsintensitätswert ein bekannter und/oder gespeicherter kritischer Strahlungsintensitätswert verwendet wird. Der kritische Strahlungsintensitätswert kann mindestens einmal zu einem Zeitpunkt vor, insbesondere unmittelbar vor, einem Einsetzen einer Verdampfung eines Materials der Schmelzschicht und/oder einer Prozessinstabilität vorbestimmt sein.

Bei Verwendung eines vorbestimmten kritischen Strahlungsintensitätswerts muss der kritische Strahlungsintensitätswert daher nicht bei jeder Durchführung des Verfahrens bestimmt werden. Der kritische Strahlungsintensitätswert kann bereits bekannt sein, z.B. da dieser bereits vor einem früheren Einstechen bestimmt und abgespeichert wurde. Wird z.B. das gleiche Blech und die gleiche Maschine (inkl. Schneidkopf und Laser) verwendet, so muss die Bestimmung des kritischen Strahlintensitätswertes nicht vor jedem Einstechen wiederholt werden, sondern es reicht eine einmalige Bestimmung z.B. im Sinne einer Kalibrierung. Es ist auch denkbar, dass bekannte kritische Strahlungsintensitätswerte von ähnlichen Blechen, insbesondere ähnlichen Legierungen, als der vorbestimmte kritische Strahlungsintensitätswert verwendet werden kann.

Wird im Verfahren der kritische Strahlungsintensitätswert erreicht, kann das Einstechverhalten beeinflusst werden. Beispielsweise können mittels dynamischer Strahlformung, auch DBS (dynamic beam shaping) genannt, durch hochfrequentes Strahlwobbeln, d.h. durch die hochfrequente Strahlbewegung, einerseits lokale Überhitzungen von vorherein verhindert oder vermieden werden und/oder die überhitzte Schmelze kann durch die schnelle Strahlbewegung innerhalb des Schmelzbads so durchmischt werden, dass eine Blasenbildung verhindert wird. Mittels Leistungsmodulation kann durch rasche Anpassung der Laserleistung und/oder des Tastverhältnisses beim Pulsen, insbesondere Pulsdauer und Pulsperiode, einer Überhitzung und/oder Prozessinstabilitäten entgegengewirkt werden. Durch Anpassen und Verändern der Fokuslage und damit der Leistungsdichte, auch genannt Fluenz, z.B. Laserenergie pro Flächeneinheit beim Pulsbetrieb, kann die Strahlungsintensität in einem für das Einstechverhalten günstigen Bereich gehalten werden. Durch eine dynamische Änderung der Magnifikation, auch Vergrößerung genannt, des Bearbeitungslaserstrahls kann dessen Leistungsdichte bzw. Fluenz in einem das Einstechverhalten optimierenden Bereich gehalten werden. Anpassungen der Fokuslage, des Fokusdurchmessers und/oder der Magnifikation können z.B. durch Verschieben von Linsen der Optikanordnung und/oder durch Verändern einer Oberflächenkrümmung eines Spiegels der Optikanordnung erfolgen. Weiter kann eine überhitzte Schmelze zur Abkühlung gebracht werden, indem der Prozessgasdruck oder das Gasgemisch verändert wird.

Das Werkstück kann als Blech oder Rohr ausgebildet sein. Die Blechdicke kann im Bereich von 1 mm bis 200 mm liegen. Der Rohrdurchmesser kann im Bereich von 10 mm bis 500 mm liegen, die Rohrwanddicke kann im Bereich von 1 mm bis 200 mm liegen. Das Verfahren zum Einstechen kann im Zusammenhang mit einem Laserschneiden, insbesondere vor einem Laserschneiden, ausgeführt werden oder Teil eines Verfahrens zum Laserschneiden sein. Laserschneiden kann als thermisches Trennen des Werkstücks in mindestens zwei Teile verstanden werden. Das Einstechen des Bearbeitungslasers kann Lasereinstechen genannt werden. Im Falle eines Einstechens durch die gesamte Dicke des Werkstücks kann das Lasereinstechen als Laserdurchstich oder Durchstich bezeichnet werden. Bei jedem Einstechen kann der Bearbeitungslaserstrahl über dem Werkstück in einer konstanten lateralen Position gehalten werden, z.B. ohne einen Vorschub einer Schneidbewegung. Der konstanten lateralen Position kann eine strahlformende dynamische Bewegung des Bearbeitungslaserstrahls überlagert sein. Die strahlformende dynamische Bewegung kann eine zu einer z-Richtung laterale und/oder parallele Bewegung des Bearbeitungslaserstrahls sein, z.B. ein zweidimensionales oder dreidimensionales Strahlwobbeln sein. Die z-Richtung kann eine Richtung sein, in der der Bearbeitungslaserstrahl auf das Werkstück gerichtet wird und/oder die mit einer Ausbreitungsrichtung des Bearbeitungslaserstrahls übereinstimmt. Die strahlformende dynamische Bewegung kann hochfrequent sein und/oder einer diskontinuierlichen Schneidbewegung des Bearbeitungslaserstrahls über das Werkstück überlagert sein. Der kritische Strahlungsintensitätswert kann für das Material des metallischen Werkstücks spezifisch sein. Das Prozesslicht, auch Prozessleuchten genannt, kann als Licht oder Leuchten verstanden werden, das im Material des Werkstücks, insbesondere der Schmelzschicht, durch eine Wechselwirkung mit dem Bearbeitungslaserstrahl erzeugt wird, insbesondere aufgrund durch den Bearbeitungslaserstrahl bewirkter thermischer Prozesse im Material der Schmelzschicht. Die Magnifikation des Bearbeitungslaserstrahls kann dynamisch einstellbar sein. Das Einstechen des Bearbeitungslaserstrahls in das Werkstück kann einmalig oder mehrmalig, insbesondere an gleichen oder verschiedenen Stellen der Werkstückoberfläche, erfolgen. Das Bestimmen des kritischen Strahlungsintensitätswerts kann vor dem Regeln des mindestens einen ermittelten Strahlungsintensitätswerts erfolgen.

Die Leistung der Laserquelle kann im Bereich von mehr als 1 kW, bevorzugt 2 bis 100 kW, mehr bevorzugt 4 bis 50 kW liegen. Das Puls-Tast-Verhältnis kann im sogenannten Dauerstrichbetrieb, d.h. bei kontinuierlichem Betrieb der Laserquelle während dem Einstechen, im Bereich bis 10% des Duty Cyles, auch Tastgrad genannt, und/oder im Bereich bis 10 MHz liegen.

Die strahlformende dynamische Bewegung des Bearbeitungslaserstrahls kann lateral und/oder parallel zu dessen Ausbreitungsrichtung und/oder zur z-Richtung erfolgen. Die strahlformende dynamische Bewegung kann z.B. mit einer Geschwindigkeit von 1Hz bis 4 MHz, bevorzugt 50Hz bis 4kHz, und/oder mit einer Amplitude von 10µm bis 2mm durchgeführt werden. Die zur Ausbreitungsrichtung und/oder z-Richtung parallele strahlformende dynamische Bewegung kann mit einer Amplitude von 10 µm bis 20 mm durchgeführt werden. Für die strahlformende dynamische Bewegung, insbesondere Auslenkung, des Bearbeitungslaserstrahls, auch Scannen des Laserstrahls genannt, kann eine Scannereinrichtung eingesetzt werden. Beispiele hierfür sind Galvo-Scanner, Piezo-Scanner, Voicecoil-Scanner oder MEMS-Scanner. Ziel dieser Technologien ist es, den Bearbeitungslaserstrahl möglichst schnell, z.B. hochfrequent, und z.B. lateral, z.B. in einer x/y-Ebene parallel zur Werkstückoberfläche, und möglichst weit, z.B. mit großen Winkeln in einem großen lateralen Scanbereich, auszulenken.

Der Fokusdurchmesser kann als Fokusdurchmesser am Prozessort, d.h. in der Wechselwirkungszone des Bearbeitungslaserstrahls mit dem Werkstück, verstanden werden. Der Fokusdurchmesser kann im Bereich von 50µm und 1mm, bevorzugt zwischen 150µm und 400µm, eingestellt werden. Als Prozessparameter kann auch die Leistungsdichte des Bearbeitungslaserstrahls gewählt werden. Die Leistungsdichte kann im Bereich von 1,3 kW/mm² bis 50000 kW/mm², bevorzugt 100 kW/mm² bis 5000 kW/mm², liegen. Ferner kann die Magnifikation des Bearbeitungslaserstrahls und/oder der Optikanordnung als Prozessparameter gewählt werden. Die Magnifikation kann im Bereich von 0,5 bis 5, bevorzugt 1,5 bis 3, liegen.

Die Strahlungsintensitätswerte können mit einer Detektoreinrichtung, z.B. einer temperaturkalibrierten Detektoreinrichtung, ausgewählt aus mindestens einer Kamera und/oder mindestens einer Photodiode, ermittelt werden. Aus den ermittelten Strahlungsintensitätswerten können Strahlungstemperaturwerte der Schmelzschicht und/oder Helligkeitswerte des Prozesslichts der Schmelzschicht abgeleitet werden. Aus den Strahlungsintensitätswerten und/oder den Strahlungstemperaturwerten und/oder Helligkeitswerten des Prozesslichts können Temperaturwerte der Schmelzschicht über den spezifischen Emissionsgrad der Schmelzschicht abgeleitet werden. Als ein Parameter für das Einstechverhalten kann also die Temperatur der Schmelze genutzt werden. Die Temperatur der Schmelze ist nicht zu verwechseln mit der Werkstücktemperatur oder der Schmelztemperatur. Der mindestens eine ermittelte Strahlungsintensitätswert kann mit einer Closed-Loop-Regelung, d.h. einem geschlossenen Regelkreis mit Signalrückkopplung, geregelt werden.

Mindestens ein Prozessgas kann auf die Prozesszone geleitet werden. Der mindestens eine Prozessparameter kann einen Parameter ausgewählt aus einer Dosierung, insbesondere der Prozessgasdruck, und einer chemischen Zusammensetzung des auf die Prozesszone geleiteten Prozessgases beinhalten. Als Prozessgas kann reiner Stickstoff, reiner Sauerstoff oder ein Gemisch davon verwendet werden. Wird ein Gemisch verwendet, so kann die Dosierung im Bereich von 1 bis 30% verändert werden. Das Prozessgas kann mindestens ein Gas beinhalten, z.B. O₂ (Sauerstoff) und/oder N₂ (Stickstoff). Ein zweites Gas kann zu einem ersten Gas beigemischt werden, z.B. in einem Bereich von mehr als 0 bis 50 Vol.-%, bevorzugt von 1 bis 30 Vol.-%, mehr bevorzugt 1 bis 20 Vol.-%. Als erstes Gas kann Stickstoff und/oder als zweites Gas kann Sauerstoff verwendet werden.

Der kritische Strahlungsintensitätswert kann durch eine Kalibration auf einen Strahlungsintensitätswert ermittelt zu einem Zeitpunkt vor, insbesondere unmittelbar vor, dem Einsetzen der Verdampfung des Materials der Schmelzschicht und/oder der Prozessinstabilität erhalten sein oder werden oder vorbestimmt sein. Der kritische Strahlungsintensitätswert kann durch eine Kalibration auf einen Strahlungsintensitätswert ermittelt zu einem Zeitpunkt vor, insbesondere unmittelbar vor, dem Einsetzen von kontinuierlich auftretenden Fluktuationen im zeitlichen Verlauf mindestens eines Strahlungsintensitätswerts und/oder mindestens eines Signals der Detektoreinrichtung erhalten sein oder werden oder vorbestimmt sein. Aus dem kritischen Strahlungsintensitätswert kann ein kritischer Temperaturwert der Schmelzschicht und/oder ein kritischer Helligkeitswert des Prozesslichts der Schmelzschicht abgeleitet werden. Auf diese Weise kann die kritische Temperatur der Schmelzschicht bestimmt werden. Die Bestimmung und/oder Kalibration der genannten kritischen Werte kann mit und/oder während dem Verfahren zum Einstechen erfolgen. Die Bestimmung und/oder Kalibration der genannten kritischen Werte kann auch während einem Laserschneiden bestimmt werden.

Anstelle der Ermittlung und Regelung des mindestens einen Strahlungsintensitätswerts kann mindestens ein örtlich aufgelöster oder flächig integrierter und zeitlich aufgelöster Temperaturwert der Schmelzschicht ermittelt und/oder bei Erreichen des kritischen Temperaturwerts auf einen Soll-Temperaturwert gleich oder kleiner dem kritischen Temperaturwert der Schmelzschicht geregelt werden. Anstelle der Ermittlung und Regelung des mindestens einen Strahlungsintensitätswerts kann mindestens ein örtlich aufgelöster oder flächig integrierter und zeitlich aufgelöster Helligkeitswert des Prozesslichts der Schmelzschicht ermittelt und/oder bei Erreichen des kritischen Helligkeitswerts auf einen Soll-Helligkeitswert gleich oder kleiner dem kritischen Helligkeitswert des Prozesslichts der Schmelzschicht geregelt werden.

Das Prozesslicht kann in einem Winkel oder koaxial zum Bearbeitungslaserstrahl detektiert werden. Der Bearbeitungslaserstrahl kann kontinuierlich, intermittierend oder gepulst erzeugt werden. Beispielsweise können für einen Durchstich mehrere Pulse auf die gleiche Stelle des Werkstücks gerichtet werden.

Die Kamera der Detektoreinrichtung kann mit einer Taktrate von mindestens 100 Hz, bevorzugt 40 Hz bis 4 kHz, mehr bevorzugt 50 bis 900 Hz, betrieben werden. Die Photodiode der Detektoreinrichtung kann mit einer Taktrate von mindestens 1 kHz betrieben werden. Der Bearbeitungslaserstrahl kann mit einem Schneidkopf auf das Werkstück geleitet werden, der die Optikanordnung und mindestens ein Element ausgewählt aus einer Austrittsöffnung für den Bearbeitungslaserstrahl und/oder für das Prozessgas und einem Schutzglas, das oberhalb der Austrittsöffnung zur Abschirmung der Optikanordnung vorgesehen ist, enthält.

Die Magnifikation des Bearbeitungslaserstrahls und/oder der Optikanordnung kann dynamisch und/oder durch eine dynamische Anpassung eines Fokusdurchmessers des Bearbeitungslaserstrahls eingestellt werden. Die Magnifikation des Bearbeitungslaserstrahls, die Position der Fokalebene des Bearbeitungslaserstrahls und/oder der Fokusdurchmesser des Bearbeitungslaserstrahls können durch Bewegen, insbesondere dynamisches Bewegen, eines optischen Elements der Optikanordnung eingestellt werden, beispielsweise durch Verschieben mindestens einer Linse der Optikanordnung parallel zu einer Ausbreitungsrichtung des Bearbeitungslaserstrahls oder durch Verändern der Oberflächenkrümmung mindestens eines Spiegels der Optikanordnung. Die Position der Fokalebene kann in einem Bereich von -20mm bis +50mm eingestellt werden, wobei die 0-Lage (0mm) den Ort bezeichnet, bei welcher die Fokalebene am Ort der Düsenspitze liegt. Die positive Richtung verläuft in Richtung der Unterkante des Werkstücks. Der Fokusdurchmesser kann in einem Bereich von 10 µm bis 1 mm eingestellt werden.

Die strahlformende dynamische Bewegung des Bearbeitungslaserstrahls kann durch dynamisches Bewegen des Bearbeitungslaserstrahls lateral und/oder parallel zu seiner Ausbreitungsrichtung und/oder zur z-Richtung erfolgen. Die strahlformende dynamische Bewegung des Bearbeitungslaserstrahls kann durch eine Variation einer Bewegungsamplitude des Bearbeitungslaserstrahls, insbesondere im Bereich von mindestens ±0,5 mm, bevorzugt mindestens ±1 mm, und/oder eine Variation einer Bewegungsfrequenz des Bearbeitungslaserstrahls, insbesondere im Bereich von 0,1 Hz bis 17 kHz, bevorzugt 10 Hz bis 15 kHz, mehr bevorzugt 100 Hz bis 4 kHz, eingestellt werden.

Eine weitere Ausführungsform betrifft eine Vorrichtung zum Einstechen in ein metallisches Werkstück mittels eines Bearbeitungslaserstrahls, insbesondere zum Einstechen in ein metallisches Werkstück mit einem Verfahren nach einem der vorstehenden Ansprüche. Die Vorrichtung beinhaltet eine Laserquelle zum Erzeugen des Bearbeitungslaserstrahls; eine Optikanordnung zum Leiten des Bearbeitungslaserstrahls auf das Werkstück und Einstechen des Bearbeitungslaserstrahls in das Werkstück unter Erzeugen einer Prozesszone mit einer Schmelzschicht und eine Detektoreinrichtung zum Detektieren eines in der Schmelzschicht durch den auf das Werkstück geleiteten Bearbeitungslaserstrahl erzeugten Prozesslichts. Die Detektoreinrichtung ist ausgebildet, eine Mehrzahl von Strahlungsintensitätswerten der Schmelzschicht örtlich aufgelöst oder flächig integriert und zeitlich aufgelöst anhand des detektierten Prozesslichts zu ermitteln. Die Vorrichtung weist ferner auf eine Regelungseinrichtung zum Regeln mindestens einen der ermittelten Strahlungsintensitätswerte bei Erreichen eines kritischen Strahlungsintensitätswerts auf einen Soll-Strahlungsintensitätswert gleich oder kleiner dem kritischen Strahlungsintensitätswert durch Anpassen mindestens eines Prozessparameters des Verfahrens. Der mindestens eine Prozessparameter ist ausgewählt aus
- einer Leistung der Laserquelle;
- einem Puls-Tastverhältnis der Laserquelle;
- einer strahlformenden dynamischen Bewegung des Bearbeitungslaserstrahls;
- einer Position einer Fokalebene des Bearbeitungslaserstrahls;
- einem Fokusdurchmesser des Bearbeitungslaserstrahls; und
- einer Magnifikation des Bearbeitungslaserstrahls;
wobei der kritische Strahlungsintensitätswert zu einem Zeitpunkt vor, insbesondere unmittelbar vor, einem Einsetzen einer Verdampfung eines Materials der Schmelzschicht und/oder einer Prozessinstabilität bestimmt ist.

Der kritische Strahlungsintensitätswert kann wie oben erläutert bestimmt oder vorbestimmt sein. Die Regelungseinrichtung kann ausgebildet sein, den kritischen Strahlungsintensitätswert mindestens einmal zu einem Zeitpunkt vor, insbesondere unmittelbar vor, einem Einsetzen einer Verdampfung eines Materials der Schmelzschicht und/oder einer Prozessinstabilität zu bestimmen oder vorzubestimmen. Die Prozessinstabilität kann ein Strahlungsintensitätswert sein, der mehr als 15%, bevorzugt mehr als 10%, mehr bevorzugt mehr als 5%, von einem Mittelwert der ermittelten Strahlungsintensitätswerte abweicht.

In der Vorrichtung kann mindestens eine Prozessgasquelle zum Leiten mindestens eines Prozessgases auf die Prozesszone des Werkstücks vorgesehen sein. Der mindestens eine Prozessparameter kann einen Parameter ausgewählt aus einer Dosierung und einer chemischen Zusammensetzung des auf die Prozesszone geleiteten Prozessgases beinhalten. Die Prozessgasquelle kann eine Dosiervorrichtung zum Dosieren des mindestens einen Prozessgases aufweisen. Die Dosiervorrichtung kann ausgebildet sein, die Dosierung im Bereich von 1 bis 30% zu verändern. An der Prozessgasquelle und/oder an der Dosiervorrichtung kann mindestens ein Prozessgasreservoir vorgesehen sein. Das mindestens eine Prozessgasreservoir kann mindestens ein Gas beinhalten, z.B. O₂ (Sauerstoff) und/oder N₂ (Stickstoff). Es können Prozessgasreservoirs für ein erstes und ein zweites Gas vorgesehen sein. Die Dosiervorrichtung kann ausgebildet sein, das zweite Gas z.B. in einem Bereich von mehr als 0 bis 50 Vol.-%, bevorzugt von 1 bis 30 Vol.-%, mehr bevorzugt 1 bis 20 Vol.-% dem ersten Gas beizumischen.

Die Leistung der Laserquelle kann im Bereich von mehr als 1 kW, bevorzugt 2 bis 100 kW, mehr bevorzugt 4 bis 50 kW liegen. Das Puls-Tast-Verhältnis kann im sogenannten Dauerstrichbetrieb, d.h. bei kontinuierlichem Betrieb der Laserquelle während dem Einstechen, im Bereich bis 10% des Duty Cyles und/oder im Bereich bis 10 MHz liegen. Die strahlformende dynamische Bewegung des Bearbeitungslaserstrahls kann lateral zu dessen Ausbreitungsrichtung erfolgen. Die strahlformende dynamische Bewegung kann z.B. mit einer Geschwindigkeit von 1Hz bis 4 MHz, bevorzugt 100Hz bis 2kHz, und/oder mit einer Amplitude von 10µm bis 2mm durchgeführt werden. Für die laterale Auslenkung des Bearbeitungslaserstrahls, auch Scannen des Laserstrahls genannt, kann in der Optikanordnung eine Scannereinrichtung vorgesehen sein. Beispiele hierfür sind mindestens ein Galvo-Scanner, Piezo-Scanner, Voicecoil-Scanner oder MEMS-Scanner. Der Fokusdurchmesser kann als Fokusdurchmesser am Prozessort, d.h. in der Wechselwirkungszone des Bearbeitungslaserstrahls mit dem Werkstück, verstanden werden. Der Fokusdurchmesser kann im Bereich von 50µm und 1mm, bevorzugt zwischen 150µm und 400µm, eingestellt werden. Als Prozessparameter kann auch die Leistungsdichte des Bearbeitungslaserstrahls gewählt werden. Die Leistungsdichte kann im Bereich von 1,3 kW/mm² bis 50000 kW/mm², bevorzugt 100 kW/mm² bis 5000 kW/mm², liegen. Ferner kann die Magnifikation des Bearbeitungslaserstrahls und/oder der Optikanordnung als Prozessparameter gewählt werden. Die Magnifikation kann im Bereich von 0,5 bis 5, bevorzugt 1,5 bis 3, liegen.

Die Detektoreinrichtung kann ausgewählt sein aus einer temperaturkalibrierten Detektoreinrichtung, einer Kamera und/oder einer Photodiode, Die Detektoreinrichtung und/oder die Regelungseinrichtung kann ausgebildet sein, aus den ermittelten Strahlungsintensitätswerten Strahlungstemperaturwerte der Schmelzschicht und/oder Helligkeitswerte des Prozesslichts der Schmelzschicht abzuleiten. Die Detektoreinrichtung und/oder die Regelungseinrichtung kann ausgebildet sein, aus den Strahlungsintensitätswerten und/oder den Strahlungstemperaturwerten und/oder Helligkeitswerten des Prozesslichts Temperaturwerte der Schmelzschicht über den spezifischen Emissionsgrad der Schmelzschicht abzuleiten. Die Regelungseinrichtung kann ausgebildet sein, den mindestens einen ermittelten Strahlungsintensitätswert mit einer Closed-Loop-Regelung zu regeln.

Der kritische Strahlungsintensitätswert kann durch eine Kalibration auf einen Strahlungsintensitätswert ermittelt zu einem Zeitpunkt vor, insbesondere unmittelbar vor, dem Einsetzen der Verdampfung des Materials der Schmelzschicht und/oder der Prozessinstabilität erhalten und/oder vorbestimmt sein. Der kritische Strahlungsintensitätswert kann durch eine Kalibration auf einen Strahlungsintensitätswert ermittelt zu einem Zeitpunkt vor, insbesondere unmittelbar vor, dem Einsetzen von kontinuierlich auftretenden Fluktuationen im zeitlichen Verlauf mindestens eines Strahlungsintensitätswerts und/oder mindestens eines Signals der Detektoreinrichtung erhalten und/oder vorbestimmt sein. Die Bestimmung und/oder Kalibration des kritischen Strahlungsintensitätswerts kann mit der Vorrichtung zum Einstechen erfolgt sein oder erfolgen.

Die Detektoreinrichtung und/oder die Regelungseinrichtung können ausgebildet sein, aus dem kritischen Strahlungsintensitätswert einen kritischen Temperaturwert der Schmelzschicht und/oder einen kritischen Helligkeitswert des Prozesslichts der Schmelzschicht abzuleiten. Die Detektoreinrichtung und/oder die Regelungseinrichtung können ausgebildet sein, aus dem mindestens einen Strahlungsintensitätswert mindestens einen örtlich aufgelösten oder flächig integrierten und zeitlich aufgelösten Temperaturwert der Schmelzschicht und/oder mindestens einen örtlich aufgelösten oder flächig integrierten und zeitlich aufgelösten Helligkeitswert des Prozesslichts der Schmelzschicht abzuleiten.

Die Regelungseinrichtung kann ausgebildet sein, anstelle der Regelung des mindestens einen Strahlungsintensitätswerts mindestens einen örtlich aufgelösten oder flächig integrierten und zeitlich aufgelösten Temperaturwert der Schmelzschicht bei Erreichen des kritischen Temperaturwerts auf einen Soll-Temperaturwert gleich oder kleiner dem kritischen Temperaturwert der Schmelzschicht zu regeln. Die Regelungseinrichtung kann ausgebildet sein, anstelle der Regelung des mindestens einen Strahlungsintensitätswerts mindestens einen örtlich aufgelösten oder flächig integrierten und zeitlich aufgelösten Helligkeitswert des Prozesslichts der Schmelzschicht bei Erreichen des kritischen Helligkeitswerts des Prozesslichts auf einen Soll-Helligkeitswert gleich oder kleiner dem kritischen Helligkeitswert des Prozesslichts der Schmelzschicht zu regeln.

Die Regelungseinrichtung kann ferner ausgebildet sein, den kritischen Strahlungsintensitätswert der Schmelzschicht durch eine Kalibration auf einen Strahlungsintensitätswert ermittelt zu einem Zeitpunkt vor, insbesondere unmittelbar vor, dem Einsetzen der Verdampfung des Materials der Schmelzschicht und/oder der Prozessinstabilität zu bestimmen und/oder vorzubestimmen. Die Regelungseinrichtung kann ausgebildet sein, den kritischen Strahlungsintensitätswert durch eine Kalibration auf einen Strahlungsintensitätswert ermittelt zu einem Zeitpunkt vor, insbesondere unmittelbar vor, dem Einsetzen von kontinuierlich auftretenden Fluktuationen im zeitlichen Verlauf mindestens eines Strahlungsintensitätswerts und/oder mindestens eines Signals der Detektoreinrichtung zu bestimmen und/oder vorzubestimmen. Es kann eine Speichereinrichtung vorgesehen sein, die mit der Regelungseinrichtung datenleitend verbunden ist und den kritischen Strahlungsintensitätswert, den kritischen Temperaturwert der Schmelzschicht und/oder den kritischen Helligkeitswert des Prozesslichts der Schmelzschicht enthält.

Die Detektoreinrichtung und/oder die Optikanordnung können ausgebildet sein und/oder positioniert sein, das Prozesslicht in einem Winkel oder koaxial zum Bearbeitungslaserstrahl zu detektieren. Die Laserquelle kann ausgebildet sein, den Bearbeitungslaserstrahl kontinuierlich, intermittierend oder gepulst zu erzeugen. Die Kamera kann eine Taktrate von mindestens 100 Hz, bevorzugt 40 Hz bis 4 kHz, mehr bevorzugt 50 bis 900 Hz, besitzen. Die Photodiode kann eine Taktrate von mindestens 1 kHz besitzen. Es kann ein Schneidkopf vorgesehen sein, der die Optikanordnung und mindestens ein Element ausgewählt aus einer Austrittsöffnung für den Bearbeitungslaserstrahl und/oder für das Prozessgas und einem Schutzglas, das oberhalb der Austrittsöffnung zur Abschirmung der Optikanordnung vorgesehen ist, enthält.

Die Regelungseinrichtung und die Optikanordnung können ausgebildet sein, die Magnifikation der Optikanordnung dynamisch und/oder durch eine dynamische Anpassung eines Fokusdurchmessers des Bearbeitungslaserstrahls einzustellen. Die Regelungseinrichtung und die Optikanordnung können ausgebildet sein, die Magnifikation der Optikanordnung, die Position der Fokalebene des Bearbeitungslaserstrahls und/oder die Leistungsdichte des Bearbeitungslaserstrahls durch Bewegen, insbesondere dynamisches Bewegen, eines optischen Elements der Optikanordnung einzustellen, insbesondere durch Verschieben mindestens einer Linse der Optikanordnung parallel zu einer Ausbreitungsrichtung des Bearbeitungslaserstrahls oder durch Verändern der Oberflächenkrümmung mindestens eines Spiegels der Optikanordnung.

Die Regelungseinrichtung und die Optikanordnung können ausgebildet sein, die strahlformende dynamische Bewegung des Bearbeitungslaserstrahls durch dynamisches Bewegen des Bearbeitungslaserstrahls lateral zu seiner Ausbreitungsrichtung zu bewirken, insbesondere durch dynamisches Bewegen eines optischen Elements, z.B. der oben erwähnten Scannereinrichtung, der Optikanordnung. Die Regelungseinrichtung kann ausgebildet sein, die strahlformende dynamische Bewegung des Bearbeitungslaserstrahls lateral zu seiner Ausbreitungsrichtung mittels einer Variation einer Bewegungsamplitude des Bearbeitungslaserstrahls, insbesondere im Bereich von mindestens ±0,5 mm, bevorzugt mindestens ± 1 mm, und/oder einer Variation einer Bewegungsfrequenz des Bearbeitungslaserstrahls, insbesondere im Bereich von 0,1 Hz bis 17 kHz, bevorzugt 10 Hz bis 15 kHz, mehr bevorzugt 100 Hz bis 4 kHz, einzustellen. Die Regelungseinrichtung kann mit mindestens einem Element ausgewählt aus der Laserquelle, einer Elementbewegungseinheit der Optikanordnung zur Erzeugung der strahlformenden dynamischen Bewegung des Bearbeitungslaserstrahls, z.B. der oben erwähnten Scannereinrichtung, und der Detektoreinrichtung datenleitend verbunden sein.

Eine weitere Ausführungsform betrifft ein Computerprogrammprodukt, beinhaltend ein oder mehrere Programmmodule, die bewirken, dass die Vorrichtung nach einer der vorstehenden Ausführungsformen und Abwandlungen davon Schritte des Verfahrens nach einer der vorstehenden Ausführungsformen und Abwandlungen davon ausführt, insbesondere wenn die Programmmodule in eine Speichereinrichtung der Vorrichtung geladen werden.

Die Ausführungsformen und Abwandlungen der Vorrichtung zum Einstechen in ein metallisches Werkstück können in den Ausführungsformen und Abwandlungen des Verfahrens zum Einstechen in ein metallisches Werkstück genutzt werden. Mit den vorstehenden Ausführungsformen der Vorrichtung zum Einstechen in ein metallisches Werkstück können die gleichen Vorteile und Funktionen realisiert werden, wie mit den Ausführungsformen des Verfahrens zum Einstechen in ein metallisches Werkstück, insbesondere mit gleichlautenden und/oder analogen Merkmalen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: schematisch einen durch einen Bearbeitungslaserstrahl erzeugten typischen Einstechkanal eines Werkstücks;
- Fig. 2: Hochgeschwindigkeits-Aufnahmen eines typischen Einstechprozesses;
- Fig. 3: eine Aufnahme einer typischen erstarrten Schmelze um einen Einstechkanal;
- Fig. 4a und 4b: jeweils schematisch einen unteren Teil eines typischen Laserbearbeitungskopfes mit unterschiedlichen Düsenabständen zu einem Werkstück;
- Fig. 5a bis 5d: schematisch ein Ausführungsbeispiel, das ein Verfahren zum Einstechen in ein metallisches Werkstück und eine Vorrichtung zum Einstechen in ein metallisches Werkstück betrifft;
- Fig. 6: schematisch ein Ausführungsbeispiel einer Vorrichtung zum Einstechen;
- Fig. 7: einen zeitlichen Verlauf eines Laserdiodensignals einer Detektoreinrichtung eines Ausführungsbeispiels einer Vorrichtung zum Einstechen abzüglich des Mittelwertes des Laserdiodensignals;
- Fig. 8: schematisch ein Ausführungsbeispiel einer Vorrichtung zum Einstechen; und
- Fig. 9: schematisch ein Ausführungsbeispiel einer Vorrichtung zum Einstechen.

In allen Ausführungsformen und Beispielen kann die Laserquelle zum Erzeugen des Bearbeitungslaserstrahls derart ausgebildet sein, dass ein kontinuierlicher und/oder diskontinuierlicher, insbesondere gepulster, Bearbeitungslaserstrahl bereitgestellt wird. In Ausführungsformen wird das Verfahren zum Einstechen mit einer Steuereinrichtung gesteuert. In Ausführungsformen beinhaltet die Vorrichtung zum Einstechen eine Steuereinrichtung, mit der die Vorrichtung zum Einstechen und deren ansteuerbare Komponenten gesteuert und/oder geregelt werden. Das Material des metallischen Werkstücks enthält mindestens ein Metall, z.B. in einer Metalllegierung.

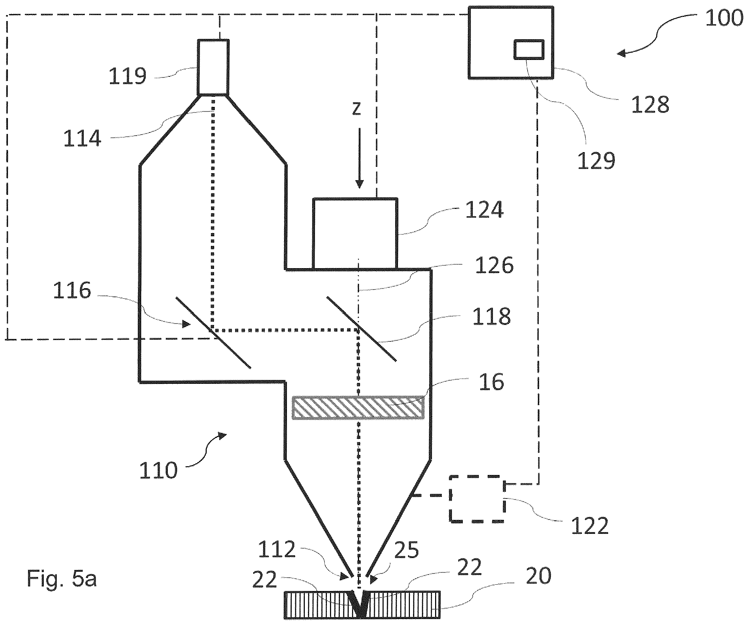

Fig. 5a bis 5d zeigen schematisch ein Ausführungsbeispiel, das ein Verfahren zum Einstechen in ein metallisches Werkstück 20 mit den Schritten S1 bis S6 und einem optionalen Schritt S7 und eine Vorrichtung 100 zum Einstechen in ein metallisches Werkstück mit einem Schneidkopf 110 betrifft.

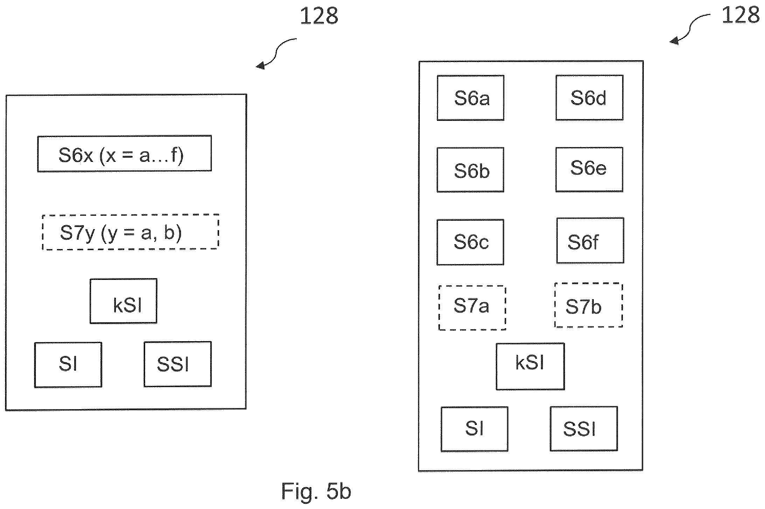

Mit dem Schneidkopf 110 kann ein Bearbeitungslaserstrahl 114 in einer z-Richtung, die vorliegend mit der Ausbreitungsrichtung des Bearbeitungslaserstrahls übereinstimmt, auf ein metallisches Werkstück 20, z.B. ein Blech aus einer Edelstahllegierung, gerichtet werden. Die Vorrichtung 100 kann eine Laserschneidvorrichtung oder Teil einer Laserschneidvorrichtung sein, die eine Bewegungseinrichtung (nicht gezeigt) beinhaltet, mit der der Schneidkopf 110 und der darin geführte Laserstrahl 114 in Schneidrichtung relativ gegenüber dem Werkstück 20 bewegt oder in einer konstanten Position gehalten werden kann. Die Vorrichtung 100 zum Einstechen besitzt eine Regelungseinrichtung 128, die mit dem Schneidkopf 110 und optional mit der Bewegungseinrichtung drahtgebunden oder drahtlos datenleitend verbunden ist. Im vorliegenden Beispiel ist die Regelungseinrichtung 128 eine zentrale Steuereinrichtung der Vorrichtung 100. Alternativ kann die Regelungseinrichtung 128 in einer zentralen Steuereinrichtung der Vorrichtung 100 enthalten oder mit dieser verbunden sein. Die Regelungseinrichtung 128 ist ausgebildet zum Regeln mindestens eines Strahlungsintensitätswerts SI bei Erreichen eines kritischen Strahlungsintensitätswerts kSI auf einen Soll-Strahlungsintensitätswert SSI gleich oder kleiner dem kritischen Strahlungsintensitätswert durch Anpassen mindestens eines Prozessparameters des Verfahrens. Wie Fig. 5b veranschaulicht, ist die Regelungseinrichtung 128 ausgebildet, mindestens einen Prozessparameter S6a bis S6f und optional zusätzlich mindestens einen Prozessparameter S7a und S7b in dem mit der Vorrichtung 100 auszuführenden Verfahren zum Einstechen zu regeln. Die Prozessparameter beinhalten eine Leistung S6a der Laserquelle; ein Puls-Tastverhältnis S6b der Laserquelle; eine strahlformende dynamische Bewegung S6c des Bearbeitungslaserstrahls; eine Position S6d einer Fokalebene des Bearbeitungslaserstrahls; einen Fokusdurchmesser S6e des Bearbeitungslaserstrahls; und/oder eine Magnifikation S6f des Bearbeitungslaserstrahls. Die optionalen Prozessparameter beinhalten eine Dosierung S7a und/oder eine chemische Zusammensetzung S7b eines auf die Prozesszone 25 geleiteten Prozessgases. In Beispielen kann nur einer der genannten Prozessparameter angepasst werden.

Fig. 5b zeigt links eine Ausführung der Regelungseinrichtung 128, die ausgebildet ist, einen oder mehrere der Prozessparameter S6x mit x = a bis f und optional S7a und/oder S7b anzupassen, für Ausführungsbeispiele, in denen nur einer oder eine Auswahl der Prozessparameter für die Regelung erforderlich sind. Fig. 5b zeigt rechts eine Ausführung der Regelungseinrichtung 128, die ausgebildet ist, jeden der Prozessparameter S6x mit x = a bis f und optional S7a und/oder S7b anzupassen, für Ausführungsbeispiele, in denen jeder der Prozessparameter S6a bis S6f und optional S7a und/oder S7b für die Regelung eingesetzt werden kann. Ferner kann in der Regelungseinrichtung 128 der für das Material des Werkstücks spezifische kritische Strahlungsintensitätswert kSI für das mit der Vorrichtung 100 auszuführende Verfahren gespeichert werden oder sein. Es können in der Regelungseinrichtung 128 für unterschiedliche Materialien des Werkstücks unterschiedliche kritische Strahlungsintensitätswerte kSI gespeichert sein. Die Regelungseinrichtung 128 kann hierfür eine Speichereinrichtung 129 enthalten.

Der kritische Strahlungsintensitätswert kSI ist oder wird zu einem Zeitpunkt vor, insbesondere unmittelbar vor, einem Einsetzen einer Verdampfung des Materials der Schmelzschicht 22 und/oder einer Prozessinstabilität bestimmt, z.B. in einer Kalibration. Der kritische Strahlungsintensitätswert kSI entspricht somit einem Strahlungsintensitätswert zu einem Zeitpunkt vor, insbesondere unmittelbar vor, einem Einsetzen einer Verdampfung des Materials der Schmelzschicht 22 und/oder einer Prozessinstabilität. Die Bestimmung und/oder Kalibration des kritischen Strahlungsintensitätswerts kann mit der Vorrichtung 100 durchgeführt sein oder werden.

Fig. 5a stellt weitere Komponenten der Vorrichtung 100 sowie den Schneidkopf 110 schematisch in einer Querschnittsansicht dar. Der Schneidkopf 110 besitzt eine Austrittsöffnung 112 für den Bearbeitungslaserstrahl 114. In einem Abstand zu der Austrittsöffnung 112 ist im Schneidkopf 110 ein Schutzglas 16 vorgesehen. Die Vorrichtung 100 besitzt eine Laserquelle 119, z.B. einen Faserlaser, zum Erzeugen des Bearbeitungslaserstrahls 114, die an dem Schneidkopf 110 angekoppelt ist. Alternativ kann die Laserquelle 119 über eine Transportfaser und/oder an einer anderen Stelle mit dem Schneidkopf 110 verbunden sein. Die Laserquelle 119 ist im vorliegenden Beispiel zum Erzeugen des Bearbeitungslaserstrahls 114 mit einer Wellenlänge von mindestens 800nm und einer Leistung von mindestens 1 kW ausgebildet.

Der Schneidkopf 110 enthält eine Optikanordnung 116, 118, die als eine Laserstrahloptik ausgebildet ist. Die Optikanordnung enthält im vorliegenden Beispiel ein bewegliches optisches Element 116 und ein unbewegliches optisches Element 118. Das bewegliche optische Element 116 besitzt eine spiegelnde Oberfläche, die für den Bearbeitungslaserstrahl 114 reflektiv ist. Die spiegelnde Oberfläche des optischen Elements 116 kann beispielsweise mit einer Frequenz von 10 Hz bis 15 kHz relativ zum auftreffenden Bearbeitungslaserstrahl 114 dynamisch bewegt und/oder verformt werden, um eine strahlformende dynamische Bewegung, auch DBS (Dynamic Beam Shaping) genannt, des Bearbeitungslaserstrahls 114 relativ, z.B. lateral oder senkrecht, zu seiner Ausbreitungsrichtung, d.h. im vorliegenden Beispiel zur z-Achse oder z-Richtung, zu bewirken. Alternativ oder zusätzlich kann die spiegelnde Oberfläche des optischen Elements 116 beispielsweise so verformt werden, dass die Position der Fokalebene des Bearbeitungslaserstrahls 114 entlang der z-Richtung relativ zum Werkstück 20, der Fokusdurchmesser und/oder die Magnifikation des Bearbeitungslaserstrahls 114 variiert wird. Das unbewegliche optische Element 118 ist ein dichroitischer Spiegel, der für den Bearbeitungslaserstrahl 114 reflektiv ist und für das Prozesslicht 126 mindestens teilweise transparent ist. Die Optikanordnung kann weitere optische Elemente, wie z.B. eine Kollimationslinse und/oder eine Fokussierlinse (jeweils nicht gezeigt), enthalten. Die optischen Elemente 116 und 118 der Optikanordnung sind im Strahlengang des Bearbeitungslaserstrahls 114 derart angeordnet und ausgerichtet, dass der Bearbeitungslaserstrahl 114 in der z-Richtung durch die Austrittsöffnung 112 geleitet, insbesondere umgelenkt, wird. Das optische Element 118 der Optikanordnung ist ferner im Strahlengang des Prozesslichts 126 angeordnet.

An dem Schneidkopf 110 sind ferner eine Detektoreinrichtung 124 und optional eine Prozessgasquelle 122 (gestrichelt dargestellt) mit mindestens einem Prozessgasreservoir angekoppelt.

Die Detektoreinrichtung 124 ist als Kamera enthaltend einen Strahlungssensor ausgebildet, der für Licht in einem Wellenlängenbereich kleiner 1000nm, beispielsweise im sichtbaren Wellenlängenbereich und/oder im nahen Infrarot, empfindlich ist. Es kann eine monochromatische Kamera mit einem CMOS- oder CCD-Chip oder mit einem Diodenarray als Strahlungssensor eingesetzt werden. Es kann statt oder nebst der Kamera auch eine Photodiode vorgesehen sein, welche das Prozesslicht mit höherer zeitlicher Auflösung detektieren kann, als die Kamera. Vorliegend handelt es sich bei dem Prozesslicht 126 um thermische Strahlung, d.h. Wärmestrahlung, einer Schmelzschicht 22 aus einer flüssigen Metallschmelze, die auf dem Werkstück 20 im Einstechkanal 21 entsteht und Werkstückmaterial enthält. Die Detektoreinrichtung 124 ist ausgebildet, eine Mehrzahl von Strahlungsintensitätswerten der Schmelzschicht 22 örtlich aufgelöst oder flächig integriert und zeitlich aufgelöst anhand des detektierten Prozesslichts 126 zu ermitteln.

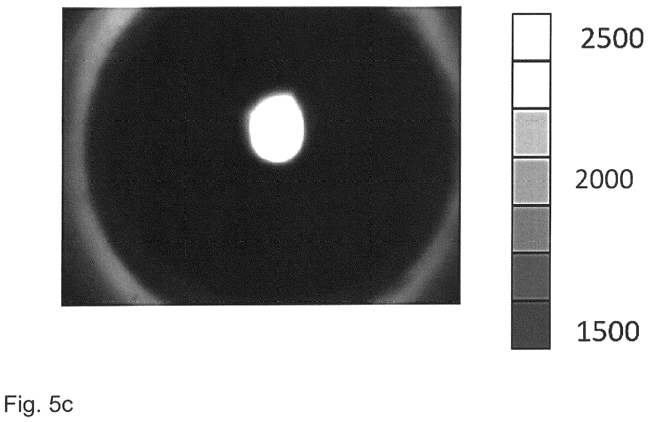

Der Strahlungssensor der Detektoreinrichtung 124 ist in einer Abwandlung des Beispiels temperaturkalibriert. Dies bedeutet, dass die Strahlungsintensität des Prozesslichts 126, das bevorzugt in einem schmalen Spektralbereich detektiert wird, einer Strahlungstemperatur zugeordnet werden kann. Eine Wärmestrahlung, auch thermische Strahlung genannt, nimmt proportional mit der physikalischen Temperatur eines Körpers zu. Das mit der Detektoreinrichtung 124 beobachtete Prozesslicht 126 entspricht im Wesentlichen thermischer Strahlung. Die temperaturkalibrierte Detektoreinrichtung 124 ist ausgebildet, ein örtlich aufgelöstes Bild mit einer Pixelverteilung und darin integrierten Strahlungstemperaturwerten aufzunehmen. Fig. 5c stellt eine beispielhafte, mit der temperaturkalibrierten Detektoreinrichtung 124 gewonnene Aufnahme der Prozesszone 25 eines metallischen Werkstücks 20 beim Einstechen während eines Pulses des Bearbeitungslaserstrahls 114 sowie eine zugehörige Temperaturskala in °C dar. Die Detektoreinrichtung 124 dieser Abwandlung des Beispiels ist somit ausgebildet, ein im Werkstück 20 durch eine Wechselwirkung mit dem Bearbeitungslaserstrahl 114 erzeugtes Prozesslicht 126 örtlich und zeitlich aufgelöst zu detektieren und daraus Strahlungstemperaturwerte zu ermitteln.

Die Detektoreinrichtung 124 ist am Schneidkopf 110 in einer Position angekoppelt, die es ermöglicht, das vom Werkstück 20 durch die Austrittsöffnung 112 emittierte Prozesslicht 126 in einer Beobachtungsrichtung koaxial mit dem in z-Richtung auf dem Werkstück 20 auftreffenden Bearbeitungslaserstrahl 114 zu detektieren. In alternativen Beispielen ist die Detektoreinrichtung 124 in der Vorrichtung 100 und/oder am oder im Schneidkopf 110 außeraxial zum Bearbeitungslaserstrahl 114 in einer Position vorgesehen, die es ermöglicht, das emittierte Prozesslicht 126 in einer Beobachtungsrichtung in einem Winkel von größer 0° bis z.B. 10° zur z-Richtung zu detektieren.

Die Prozessgasquelle 122 (in Fig. 5a gestrichelt dargestellt) stellt in einer Abwandlung des Beispiels ein Prozessgas bereit und ist fluid-leitend an den Schneidkopf 110 angekoppelt, wie in Fig. 5a veranschaulicht. Z.B. enthält das Prozessgas Argon, H₂, N₂, O₂, CO, CO₂ und/oder ein Schwefelhaltiges Gas.

Die Regelungseinrichtung 128 ist mit mindestens einer Komponente der Vorrichtung 100 ausgewählt aus der Laserquelle 119, dem beweglichen optischen Element 116 der Optikanordnung, der optionalen Prozessgasquelle 122 und der Detektoreinrichtung 124 drahtlos und/oder drahtgebunden datenleitend verbunden, was in Fig. 5a mit gestrichelten Verbindungslinien veranschaulicht ist. Die Komponenten, die mit der Regelungseinrichtung 128 datenleitend verbunden sind, sind ansteuerbar ausgebildet. Die Regelungseinrichtung 128 ist im vorliegenden Beispiel ausgebildet, eine Closed-Loop-Regelung der Prozessparameter durchzuführen.

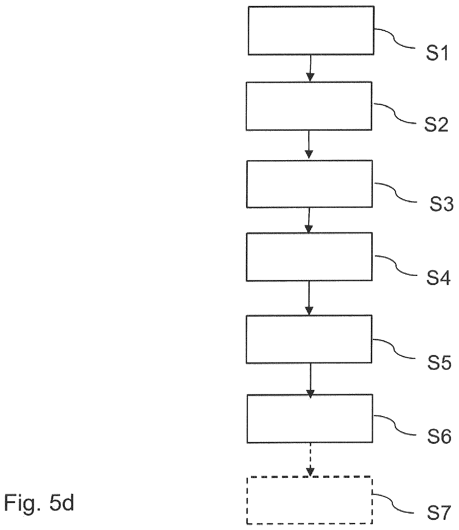

Mit der Vorrichtung 100 wird ein Verfahren zum Einstechen in ein metallisches Werkstück ausgeführt, wie in Fig. 5d schematisch dargestellt. Das Verfahren zum Einstechen kann im Zusammenhang mit einem Verfahren zum Laserschneiden ausgeführt werden und/oder Teil eines Verfahrens zum Laserschneiden sein. Beim Einstechen kann der Schneidkopf 110 über dem Werkstück 20 in einer lateral konstanten Position gehalten werden, z.B. 0,1 bis 20 s lang, z.B. abhängig von der Dicke und/oder des Materials des Werkstücks und/oder von der Laserleistung. In einem Schritt S1 wird der Bearbeitungslaserstrahl 114 mit der Laserquelle 119 erzeugt. Dies kann in einem Dauerstrich-Betrieb oder mit gepulstem Laserstrahl 114 erfolgen.

Die Optikanordnung 116, 118 des Schneidkopfs 110 leitet den Bearbeitungslaserstrahl 114 in einer z-Richtung durch die Austrittsöffnung 112 auf das Werkstück 20, in einem Schritt S2. Der Bearbeitungslaserstrahl 114 sticht in einem Schritt S3 in das Werkstück ein, wobei eine Prozesszone 25 mit einer Schmelzschicht 22 im Werkstück erzeugt wird. Dabei wird durch eine Wechselwirkung mit dem Bearbeitungslaserstrahl 114 das Prozesslicht 126 erzeugt und von der Prozesszone 25 zumindest teilweise durch die Austrittsöffnung 112 in den Schneidkopf 110 emittiert. Das Prozesslicht 126 gelangt durch den dichroitischen Spiegel 118 in die Detektoreinrichtung 124 und wird dort in einem Schritt S4 detektiert. Die Detektoreinrichtung 124 ermittelt in einem Schritt S5 eine Mehrzahl von Strahlungsintensitätswerten SI der Schmelzschicht 22 örtlich aufgelöst oder flächig integriert und zeitlich aufgelöst anhand des detektierten Prozesslichts 126. Die Regelungseinrichtung 128 regelt in einem Schritt S6 mindestens einen der ermittelten Strahlungsintensitätswerte SI bei Erreichen eines kritischen Strahlungsintensitätswerts kSI auf einen Soll-Strahlungsintensitätswert SSI gleich oder kleiner dem kritischen Strahlungsintensitätswert durch Anpassen mindestens eines Prozessparameters S6a bis S6f und optional zusätzlich mindestens einen Prozessparameter S7a und S7b des Verfahrens. Der kritische Strahlungsintensitätswert kSI wird oder ist zu einem Zeitpunkt vor, insbesondere unmittelbar vor, einem Einsetzen einer Verdampfung des Materials der Schmelzschicht 22 und/oder einer Prozessinstabilität bestimmt.

Der mindestens eine Prozessparameter wird dabei von der Regelungseinrichtung 128 ausgewählt. Werden als Prozessparameter die Leistung S6a der Laserquelle und/oder das Puls-Tastverhältnis S6b der Laserquelle variiert, steuert die Regelungseinrichtung 128 die Laserquelle 119 entsprechend an. Werden als Prozessparameter die strahlformende dynamische Bewegung S6c des Bearbeitungslaserstrahls 114, die Position S6d der Fokalebene des Bearbeitungslaserstrahls 114, der Fokusdurchmesser S6e des Bearbeitungslaserstrahls 114 und/oder die Magnifikation S6f des Bearbeitungslaserstrahls variiert, wird das bewegliche optische Element 116 entsprechend angesteuert.

Damit auf eine z.B. lokale, unerwünschte Überhitzung der Schmelze in der Schmelzschicht 22, z.B. eine kritische Temperatur, reagiert werden oder diese vermieden werden kann, führt die Regelungseinrichtung 128 eine Closed-Loop-Regelung durch, welche einen oder mehrere der Prozessparameter regelt und der Überhitzung entgegenwirkt oder diese vermeidet. Eine Überhitzung ausgedrückt als kritische Temperatur ist wie erwähnt dann vorhanden, wenn die Temperatur der Schmelze nahezu die Verdampfungstemperatur erreicht. Wenn die ermittelten Strahlungsintensitätswerte der Schmelze in der Schmelzschicht, und somit auch die SchmelzbadTemperatur, entweder flächig integriert oder ortsaufgelöst lokal in einen kritischen Bereich kommt, d.h. es zu lokalen Überhitzungen und/oder Prozessinstabilitäten kommen könnte, dann regelt die Regelungseinrichtung 128 einen oder mehrere der Prozessparameter nach, um so den Prozess zu stabilisieren.

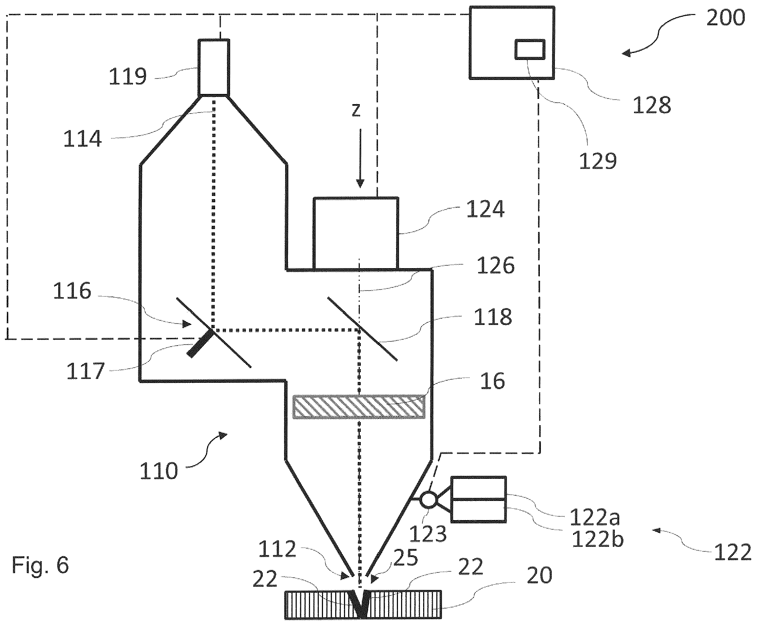

In Fig. 6 ist als ein weiteres Beispiel eine Vorrichtung 200 zum Einstechen mit beispielhaften Ausgestaltungen des beweglichen optischen Elements 116 der Optikanordnung und der Prozessgasquelle 122 schematisch dargestellt.

In der Ausgestaltung der Vorrichtung 200 besitzt das bewegliche optische Element 116 mindestens eine Elementbewegungseinheit 117, z.B. mindestens einen Aktuator, zur Erzeugung der strahlformenden dynamischen Bewegung des Bearbeitungslaserstrahls 114. Das bewegliche optische Element 116 enthält mindestens eine spiegelnde Oberfläche, die mit der Elementbewegungseinheit 117 mit einer Frequenz von 10 Hz bis 15 kHz relativ zum auftreffenden Bearbeitungslaserstrahl 114 dynamisch bewegt werden kann, um eine strahlformende dynamische Bewegung, auch DBS (Dynamic Beam Shaping) genannt, des Bearbeitungslaserstrahls 114 z.B. lateral zu seiner Ausbreitungsrichtung, d.h. der z-Richtung, zu bewirken. Das bewegliche optische Element 116 kann z.B. als ein zumindest teilweise beweglicher Spiegel ausgebildet sein. Der Spiegel 116 kann beispielsweise dynamisch orientierbar, z.B. verkippbar, ausgebildet sein. Der Spiegel 116 kann Teil eines Galvanometer-Scanners sein. Ferner kann der Spiegel 116 um eine Achse rotierbar sein, die mit einer spiegelnden Ebene des Spiegels einen Winkel einschließt, und derart orientierbar sein, dass der Winkel größer oder kleiner 90° ist. Die spiegelnde Oberfläche des optischen Elements 116 kann dynamisch verformbar sein. Der Spiegel 116 kann z.B. als ein Segmentspiegel mit mehreren Spiegelsegmenten, die jeweils dynamisch orientierbar sind, ausgebildet sein. Das optische Element 116 kann als ein mit mindestens einem Piezo-Aktuator verformbarer Spiegel, ein bimorph deformierbarer Spiegel, ein auf MEMS- oder MOEMS- Basis deformierbarer Spiegel und/oder ein auf Schwingspulen-Basis deformierbarer Spiegel ausgebildet sein. Die Elementbewegungseinheit 117 ist ansteuerbar und kann mindestens ein Element ausgewählt aus einem Piezo-Aktuator, einem Elektromotor, einem pneumatischen Motor, einem Exzenter, einer Vorrichtung zur Erzeugung eines oszillierenden elektromagnetischen Felds, einem MEMS-Oszillator, einer Schwingspule, einem elektrostatisch bewegbaren Aktuator, einer Mehrzahl davon und/oder einer Kombination davon aufweisen. Die Regelungseinrichtung 128 ist im vorliegenden Beispiel mit der Elementbewegungseinheit 117 datenleitend verbunden.

Im Betrieb der Vorrichtung 200 werden mit der Regelungseinrichtung 128 die strahlformende dynamische Bewegung S6c des Bearbeitungslaserstrahls 114, die Position S6d der Fokalebene des Bearbeitungslaserstrahls 114, der Fokusdurchmesser S6e des Bearbeitungslaserstrahls 114 und/oder die Magnifikation S6f des Bearbeitungslaserstrahls durch Bewegen des optischen Elements 116 der Optikanordnung variiert, z.B. durch Verändern der Oberflächenkrümmung des optischen Elements 116.

Die Vorrichtung 200 ist mit der Prozessgasquelle 122 versehen, die im vorliegenden Beispiel eine Dosiervorrichtung 123 und zwei Prozessgasreservoirs 122a, 122b mit unterschiedlichen Gasen aufweist. Die Prozessgasreservoirs sind jeweils über die Dosiervorrichtung 123, z.B. ein Mischventil, fluidleitend mit dem Schneidkopf 110 verbunden. Die Dosiervorrichtung 123 ist ansteuerbar ausgebildet und mit der Regelungseinrichtung 128 datenleitend verbunden. Im Betrieb der Vorrichtung 200 wird in einem Schritt S7 mit der Prozessgasquelle 122 mindestens eines der Gase als Prozessgas in den Schneidkopf 110 geleitet und durch die Austrittsöffnung 112 auf das metallische Werkstück 20 gerichtet. Dabei können zusätzlich zu einem oder mehreren der Prozessparameter S6a bis S6f eine Dosierung S7a und/oder eine chemische Zusammensetzung S7b des auf die Prozesszone 25 geleiteten Prozessgases für die Regelung des oder der ermittelten Strahlungsintensitätswerte variiert werden.

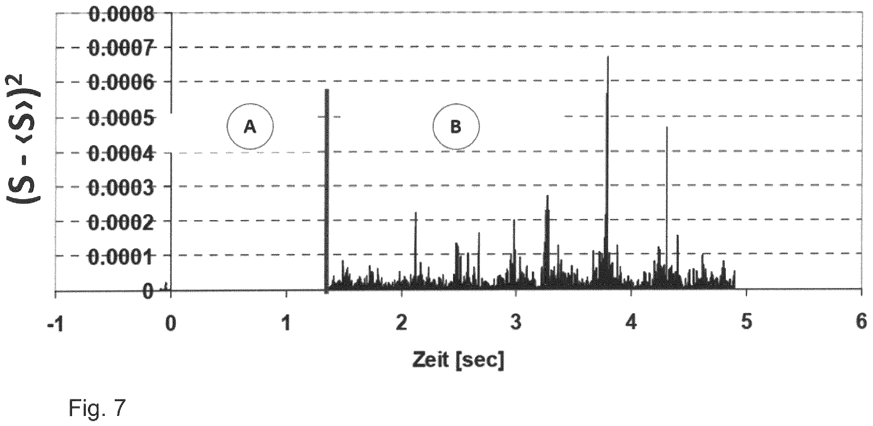

Der kritische Strahlungsintensitätswert kSI kann durch eine Kalibration auf einen Strahlungsintensitätswert ermittelt zu einem Zeitpunkt vor, insbesondere unmittelbar vor, dem Einsetzen der Verdampfung des Materials der Schmelzschicht und/oder einer Prozessinstabilität erhalten sein oder werden. Der kritische Strahlungsintensitätswert kSI kann beispielsweise durch eine Kalibration auf einen Strahlungsintensitätswert ermittelt zu einem Zeitpunkt vor, insbesondere unmittelbar vor, dem Einsetzen von kontinuierlich auftretenden Fluktuationen im zeitlichen Verlauf mindestens eines Strahlungsintensitätswerts SI und/oder mindestens eines Signals der Detektoreinrichtung erhalten sein oder werden. Diese Kalibrationen können mit der Vorrichtung zum Einstechen erfolgen. Je nach metallischem Material des Werkstücks 20 kann der kritische Strahlungsintensitätswert anders sein. Kritisch ist insbesondere der Strahlungsintensitätswert, der nahe am Siedepunkt des metallischen Materials ermittelt wird. Ist die Schmelze nahe am Siedepunkt, wird die Schmelze in der Schmelzschicht 22 unruhig und die Strahlungsintensität weist erhöhte Fluktuationen auf. Diese Fluktuationen können ebenfalls mit der Kamera der Detektoreinrichtung 124 mit einer Taktrate von einigen 100Hz erfasst werden. Einfacher geht es hingegen mit einer Photodiode der Detektoreinrichtung 124, welche mit Taktraten im kHz-Bereich operiert. Fig. 7 zeigt das Quadrat des Laserdiodensignals S abzüglich des Mittelwertes <S> des Laserdiodensignals, d.h. (S-<S>)², bei welcher die Schmelze von stabil in einem Regime A zu instabil in einem Regime B wechselt. Kurz vor dem Beginn des Regimes B existiert eine Stabilitätsgrenze. Die Strahlungsintensität SI, welche mit der Detektoreinrichtung 124 zu diesem Zeitpunkt gemessen wird, kann für dieses Material als die kritische Strahlungsintensität kSI verwendet und/oder abgespeichert werden. Ferner kann ein Wert des Betrags des Verhältnisses von Signaländerung ΔS (=S-<S>) zu Signalmittelwert <S> von über 15%, d.h. IAS/<S>I>15%, auf eine Prozessinstabilität hinweisen und/oder die Strahlungsintensität SI, welche mit der Detektoreinrichtung 124 vor, insbesondere unmittelbar vor, dem Messen dieses Wertes, also vor dem Einsetzen der Prozessinstabilität, gemessen wird, kann für dieses Material als die kritische Strahlungsintensität kSI verwendet und/oder abgespeichert werden. Die Bestimmung der kritischen Strahlungsintensität kSI gelingt beispielsweise am einfachsten während eines Dauerstrich-Einstechens oder während eines Dauerstrich-Schnitts. Der Begriff "Dauerstrich" kann als permanente, nicht-gepulste Laser-Emission verstanden werden. Um eine Stabilitätsgrenze des Prozesses zu bestimmen, kann der Prozess an diese geführt werden, indem z.B. im Dauerstrichschneiden der Vorschub reduziert wird, was zu einer erhöhten Streckenenergie führt und zu Prozessinstabilitäten führen kann. Alternativ kann die Fokuslage und/oder -größe derart verändert werden, dass es zu einer lokalen Überhitzung kommt. Eine weitere gute Methode, um eine Prozessinstabilität zu provozieren, kann das Verändern des Gasdruckes und/oder des Gasgemisches sein. Wird Sauerstoff verwendet, so kann der Druck erhöht werden, um Instabilitäten zu erzeugen. Wird ein Mischgas verwendet, so kann der Sauerstoffanteil erhöht werden, um den Prozess an seine Stabilitätsgrenzen zu bringen.

Mit der vorstehenden Methode der Bestimmung der kritischen Strahlungsintensität kann darauf verzichtet werden, die Temperatur der Schmelze in der Schmelzschicht und eine kritische Temperatur absolut zu kennen.

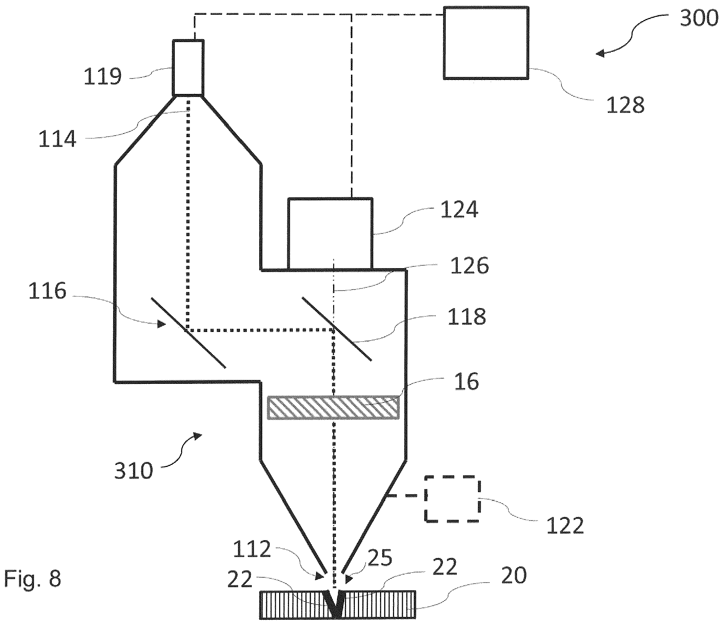

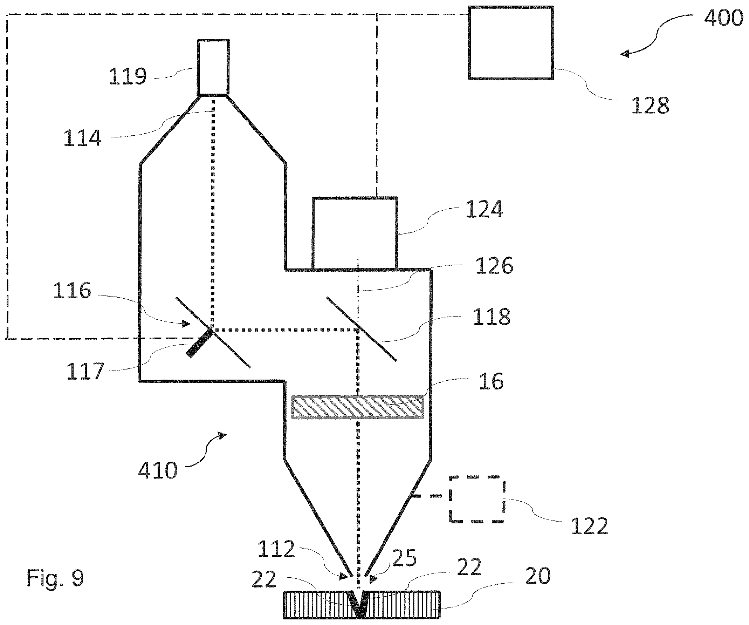

In anderen Beispielen ist die Vorrichtung zum Einstechen als Abwandlung der Vorrichtung 100 so ausgebildet, dass für die Regelung lediglich einer oder eine beliebige Kombination der Prozessparameter S6a bis S6f im Schritt S6 des Verfahrens mittels der Regelungseinrichtung 128 während des Einstechens kontinuierlich oder diskontinuierlich solange variiert wird/werden, bis der mindestens eine ermittelte Strahlungsintensitätswert jeweils gleich oder kleiner dem kritischen Strahlungsintensitätswert ist. In derartigen Beispielen ist die Regelungseinrichtung 128 daher lediglich mit der/den anzusteuernden Komponente(n) verbunden, die für die betreffende Regelung eingesetzt wird/werden. Dies ist mit den beispielhaften Vorrichtungen 300 und 400 und den Schneidköpfen 310 bzw. 410 in Fig. 8 und 9 veranschaulicht. Mit der Vorrichtung 300 wird zum Regeln des mindestens einen Strahlungsintensitätswerts SI die Leistung S6a der Laserquelle und/oder das Puls-Tastverhältnis S6b der Laserquelle variiert, und die Regelungseinrichtung 128 ist mit der Detektoreinrichtung 124 und der Laserquelle 119 datenleitend verbunden. Mit der Vorrichtung 400 werden als Prozessparameter die strahlformende dynamische Bewegung S6c des Bearbeitungslaserstrahls 114, die Position S6d der Fokalebene des Bearbeitungslaserstrahls 114, der Fokusdurchmesser S6e des Bearbeitungslaserstrahls 114 und/oder die Magnifikation S6f des Bearbeitungslaserstrahls variiert, und die Regelungseinrichtung 128 ist mit der Detektoreinrichtung 124 und dem beweglichen optischen Element 116 datenleitend verbunden.

### Bezugszeichenliste

- 10: Laserbearbeitungskopf
- 11: Düsenabstand
- 12: Prozesszone
- 13: Düsenöffnung
- 15: Bearbeitungslaserstrahl
- 16: Schutzglas
- 17: Düsenspitze
- 20: Werkstück
- 21: Einstechkanal
- 22: Schmelzschicht
- 23: Rand
- 24: Spritzzone
- 25: Prozesszone
- 100: Vorrichtung zum Einstechen in ein metallisches Werkstück;
- 110: Schneidkopf
- 112: Austrittsöffnung
- 114: Bearbeitungslaserstrahl
- 116: Lichtstrahloptik, optisches Element
- 117: Elementbewegungseinheit
- 118: Lichtstrahloptik, optisches Element
- 119: Laserquelle
- 120: Bewegungseinrichtung
- 122: Prozessgasquelle
- 123: Gasdosiereinrichtung
- 124: Detektoreinrichtung
- 126: Prozesslicht
- 128: Regelungseinrichtung
- 129: Speichereinrichtung
- 200: Vorrichtung zum Einstechen in ein metallisches Werkstück;
- 300: Vorrichtung zum Einstechen in ein metallisches Werkstück;
- 400: Vorrichtung zum Einstechen in ein metallisches Werkstück;
- kSI: kritischer Strahlungsintensitätswert
- P: Pfeil
- S1: Schritt
- S2: Schritt
- S3: Schritt
- S4: Schritt
- S5: Schritt
- S6: Schritt
- S7: Schritt
- S6x: Prozessparameter mit x = a bis f
- S7y: Prozessparameter mit y = a, b
- S6a: Leistung der Laserquelle
- S6b: Puls-Tast-Verhältnis der Laserquelle
- S6c: strahlformende dynamische Bewegung des Bearbeitungslaserstrahls
- S6d: Position einer Fokalebene des Bearbeitungslaserstrahls
- S6e: Fokusdurchmesser des Bearbeitungslaserstrahls
- S6f: Magnifikation des Bearbeitungslaserstrahls
- S7e: Dosierung des auf die Prozesszone geleiteten Prozessgases
- S7f: chemische Zusammensetzung des auf die Prozesszone geleiteten Prozessgases
- SI: Strahlungsintensitätswert
- SSI: Soll-Strahlungsintensitätswert
- z: Richtung des Bearbeitungslaserstrahls, Achse

## Patentansprüche

1. Verfahren zum Einstechen in ein metallisches Werkstück (20) mittels eines Bearbeitungslaserstrahls (114), beinhaltend
- Erzeugen des Bearbeitungslaserstrahls (114) mit einer Laserquelle (119) (S1);
- Leiten des Bearbeitungslaserstrahls mittels einer Optikanordnung (116, 118) auf das Werkstück (S2);
- einmaliges oder mehrmaliges Einstechen des Bearbeitungslaserstrahls in das Werkstück unter Erzeugen einer Prozesszone (25) mit einer Schmelzschicht (22) (S3); und
- Detektieren eines durch den Bearbeitungslaserstrahl in der Schmelzschicht erzeugten Prozesslichts (126) (S4);
**dadurch gekennzeichnet, dass**
eine Mehrzahl von Strahlungsintensitätswerten (SI) der Schmelzschicht (22) örtlich aufgelöst oder flächig integriert und zeitlich aufgelöst anhand des detektierten Prozesslichts (126) ermittelt werden (S5); und
mindestens einer der ermittelten Strahlungsintensitätswerte (SI) bei Erreichen eines kritischen Strahlungsintensitätswerts (kSI) auf einen Soll-Strahlungsintensitätswert (SSI) gleich oder kleiner dem kritischen Strahlungsintensitätswert geregelt wird durch Anpassen mindestens eines Prozessparameters (S6a, S6b, S6c, S6d, S6e, S6f; S7a, S7b) des Verfahrens (S6);
wobei der mindestens eine Prozessparameter ausgewählt wird aus
- einer Leistung (S6a) der Laserquelle;
- einem Puls-Tastverhältnis (S6b) der Laserquelle;
- einer strahlformenden dynamischen Bewegung (S6c) des Bearbeitungslaserstrahls;
- einer Position (S6d) einer Fokalebene des Bearbeitungslaserstrahls;
- einem Fokusdurchmesser (S6e) des Bearbeitungslaserstrahls; und
- einer Magnifikation (S6f) des Bearbeitungslaserstrahls;
wobei der kritische Strahlungsintensitätswert (kSI) mindestens einmal zu einem Zeitpunkt vor, insbesondere unmittelbar vor, einem Einsetzen einer Verdampfung eines Materials der Schmelzschicht (22) und/oder einer Prozessinstabilität bestimmt wird oder vorbestimmt ist.

2. Verfahren nach Anspruch 1,
wobei die Strahlungsintensitätswerte (SI) mit einer Detektoreinrichtung (124) ermittelt werden.

3. Verfahren nach einem der vorstehenden Ansprüche,
wobei aus den ermittelten Strahlungsintensitätswerten (SI) Strahlungstemperaturwerte der Schmelzschicht und/oder Helligkeitswerte des Prozesslichts der Schmelzschicht (22) abgeleitet werden.

4. Verfahren nach einem der vorstehenden Ansprüche,
wobei aus den Strahlungsintensitätswerten (SI) und/oder den Strahlungstemperaturwerten und/oder Helligkeitswerten des Prozesslichts (126) Temperaturwerte der Schmelzschicht (22) über den spezifischen Emissionsgrad der Schmelzschicht abgeleitet werden.

5. Verfahren nach einem der vorstehenden Ansprüche,
wobei der mindestens eine ermittelte Strahlungsintensitätswert (SI) mit einer Closed-Loop-Regelung geregelt wird.

6. Verfahren nach eine der vorstehenden Ansprüche,
wobei mindestens ein Prozessgas auf die Prozesszone (25) geleitet wird (S7); und
wobei der mindestens eine Prozessparameter einen Parameter ausgewählt aus einer Dosierung (S7a) und einer chemischen Zusammensetzung (S7b) des auf die Prozesszone (25) geleiteten Prozessgases beinhaltet.

7. Verfahren nach einem der vorstehenden Ansprüche,
wobei der kritische Strahlungsintensitätswert (kSI) durch eine Kalibration auf einen Strahlungsintensitätswert (SI) ermittelt zu einem Zeitpunkt vor, insbesondere unmittelbar vor, dem Einsetzen der Verdampfung des Materials der Schmelzschicht (22) und/oder der Prozessinstabilität erhalten ist oder wird.

8. Verfahren nach einem der vorstehenden Ansprüche,
wobei der kritische Strahlungsintensitätswert (kSI) durch eine Kalibration auf einen Strahlungsintensitätswert (SI) ermittelt zu einem Zeitpunkt vor, insbesondere unmittelbar vor, dem Einsetzen von kontinuierlich auftretenden Fluktuationen im zeitlichen Verlauf mindestens eines Strahlungsintensitätswerts (SI) und/oder mindestens eines Signals der Detektoreinrichtung erhalten ist oder wird.

9. Verfahren nach einem der vorstehenden Ansprüche,
wobei aus dem kritischen Strahlungsintensitätswert (kSI) ein kritischer Temperaturwert der Schmelzschicht und/oder ein kritischer Helligkeitswert des Prozesslichts (126) der Schmelzschicht abgeleitet werden.

10. Verfahren nach einem der vorstehenden Ansprüche,
wobei anstelle der Ermittlung und Regelung des mindestens einen Strahlungsintensitätswerts (SI) mindestens ein örtlich aufgelöster oder flächig integrierter und zeitlich aufgelöster Temperaturwert der Schmelzschicht ermittelt und bei Erreichen des kritischen Temperaturwerts auf einen Soll-Temperaturwert gleich oder kleiner dem kritischen Temperaturwert der Schmelzschicht geregelt wird.

11. Verfahren nach einem der vorstehenden Ansprüche,
wobei anstelle der Ermittlung und Regelung des mindestens einen Strahlungsintensitätswerts (SI) mindestens ein örtlich aufgelöster oder flächig integrierter und zeitlich aufgelöster Helligkeitswert des Prozesslichts der Schmelzschicht ermittelt und bei Erreichen des kritischen Helligkeitswerts auf einen Soll-Helligkeitswert gleich oder kleiner dem kritischen Helligkeitswert des Prozesslichts (126) der Schmelzschicht (22) geregelt wird.

12. Verfahren nach einem der vorstehenden Ansprüche,
wobei die Magnifikation des Bearbeitungslaserstrahls, die Position der Fokalebene des Bearbeitungslaserstrahls und/oder der Fokusdurchmesser des Bearbeitungslaserstrahls durch Bewegen, insbesondere dynamisches Bewegen, eines optischen Elements (116) der Optikanordnung (116, 118) eingestellt wird, insbesondere durch Verschieben mindestens einer Linse der Optikanordnung parallel zu einer Ausbreitungsrichtung des Bearbeitungslaserstrahls oder durch Verändern der Oberflächenkrümmung mindestens eines Spiegels der Optikanordnung eingestellt wird.

13. Vorrichtung (100; 200; 300; 400) zum Einstechen in ein metallisches Werkstück (20) mittels eines Bearbeitungslaserstrahls (114), insbesondere zum Einstechen in ein metallisches Werkstück mit einem Verfahren nach einem der vorstehenden Ansprüche, beinhaltend
- eine Laserquelle (119) zum Erzeugen des Bearbeitungslaserstrahls (114 );
- eine Optikanordnung (116, 118) zum Leiten des Bearbeitungslaserstrahls auf das Werkstück und Einstechen des Bearbeitungslaserstrahls in das Werkstück unter Erzeugen einer Prozesszone (25) mit einer Schmelzschicht (22); und
- eine Detektoreinrichtung (124) zum Detektieren eines in der Schmelzschicht durch den auf das Werkstück geleiteten Bearbeitungslaserstrahl erzeugten Prozesslichts (126);
**dadurch gekennzeichnet, dass**
die Detektoreinrichtung (124) ausgebildet ist, eine Mehrzahl von Strahlungsintensitätswerten (SI) der Schmelzschicht (22) örtlich aufgelöst oder flächig integriert und zeitlich aufgelöst anhand des detektierten Prozesslichts (126) zu ermitteln; und
die Vorrichtung (100; 200; 300; 400) ferner aufweist
- eine Regelungseinrichtung (128) zum Regeln mindestens einen der ermittelten Strahlungsintensitätswerte (SI) bei Erreichen eines kritischen Strahlungsintensitätswerts (kSI) auf einen Soll-Strahlungsintensitätswert (SSI) gleich oder kleiner dem kritischen Strahlungsintensitätswert (kSI) durch Anpassen mindestens eines Prozessparameters (S6a, S6b, S6c, S6d, S6e, S6f; S7a, S7b) des Verfahrens;
wobei der mindestens eine Prozessparameter ausgewählt ist aus
- einer Leistung (S6a) der Laserquelle (119);
- einem Puls-Tastverhältnis (S6b) der Laserquelle;
- einer strahlformenden dynamischen Bewegung (S6c) des Bearbeitungslaserstrahls (114);
- einer Position (S6d) einer Fokalebene des Bearbeitungslaserstrahls (114);
- einem Fokusdurchmesser (S6e) des Bearbeitungslaserstrahls (114); und
- einer Magnifikation (S6f) des Bearbeitungslaserstrahls (114);
wobei der kritische Strahlungsintensitätswert (kSI) zu einem Zeitpunkt vor, insbesondere unmittelbar vor, einem Einsetzen einer Verdampfung eines Materials der Schmelzschicht (22) und/oder einer Prozessinstabilität bestimmt ist.

14. Vorrichtung nach Anspruch 13,
wobei mindestens eine Prozessgasquelle (122) zum Leiten mindestens eines Prozessgases auf die Prozesszone (25) des Werkstücks vorgesehen ist und
wobei der mindestens eine Prozessparameter einen Parameter ausgewählt aus einer Dosierung (S7a) und einer chemischen Zusammensetzung (S7b) des auf die Prozesszone geleiteten Prozessgases beinhaltet.

15. Computerprogrammprodukt, beinhaltend ein oder mehrere Programmmodule, die bewirken, dass die Vorrichtung nach einem der Ansprüche 13 bis 14 Schritte des Verfahrens nach einem der Ansprüche 1 bis 12 ausführt, insbesondere wenn die Programmmodule in eine Speichereinrichtung der Vorrichtung geladen werden.
